# EUROPEAN PATENT APPLICATION

(11) **EP 0 911 221 A2**
(43) Date of publication of application: **28.04.1999**
(21) Application number: 98120021.5
(22) Date of filing: 22.10.1998
(51) Int. Cl.: B60R 16/02

(54) **Vehicle mounted multiplex communication system**

(30) Priority: 27.10.1997 JP 294179/97
(71) Applicant: Harness System Technologies Research, Ltd., Nagoya-shi, Aichi (JP); SUMITOMO WIRING SYSTEMS, Ltd., Yokkaichi-shi, Mie (JP); SUMITOMO ELECTRIC INDUSTRIES, LTD., Osaka-shi, Osaka (JP)
(72) Inventor: Nakatsuji, Naohiro, Harness Syst. Tech. Res. Ltd., Nagoya-shi, Aichi (JP)
(74) Representative: R.A. KUHNEN & P.A. WACKER

(57) **Abstract**

A vehicle mounted multiplex communication system, in that an output circuit for changing load to be driven liable to become failure due to external reason is eliminated from a first multiplex communication apparatus integrally housed within a joint box. The output circuit is housed within a second multiplex communication apparatus separately connected to a communication line. Thus, the probability of the failure of the first multiplex communication apparatus is reduced so that it is not required to be exchanged for a new one. At the time of the failure of the output circuit, only the second multiplex communication apparatus having no input circuit therein is exchanged for a new one.

## Description

### BACKGROUND OF THE INVENTION

The present invention relates to a vehicle mounted multiplex communication system in which a plurality of multiplex communication apparatuses are connected to communication lines so as to be able to communicate mutually and at least one of the plurality of multiplex communication apparatuses is housed within a joint box integrally therewith.

Recently, in accordance with the development of the electronics technology, many various kinds of electrical parts have been employed in the field of automobile. Such electrical parts are, for example, supplied with electric power from a common battery and driven in accordance with the turning on or off operations etc. of operation switches having associated functions, respectively. Most of the operation switches are dispersedly disposed, for example, within an install panel provided at the front portion between a driver's seat and a passanger seat, on arm rests at the respective doors, or at the vicinity of various detection positions of sensors within a vehicle.

On and off signals or the like from such a plurality of operation switches are transmitted to the driving systems of the respective portions of an automobile. In contrast, the detection signals from sensors disposed in the vicinity of the driving systems are transmitted to a central control portion disposed at the rear side of the install panel. Further, it is reported to an originator as to whether or not the transmitted signal has been surely received at a destination. In the aforesaid cases, in order to transmit such plural kinds of communication signals through communication lines whose number is made as small as possible, it is required to transmit these plural kinds of communication signals without causing interference or crosstalk from one another. In most cases, the vehicle mounted multiplex communication system has been employed as one of communication methods for preventing such interference or crosstalk.

As examples of such a vehicle mounted multiplex communication system, there have been employed the frequency division multiplex method for changing communication frequency in accordance with the kinds of signal, the time division multiplex method in which simultaneous transmission of different kinds of signals is avoided by finely allocating signals to transmission time frames in accordance with a predetermined procedure, and the code division multiplex method for transmitting signals by differentiating the PN series used for signal spreading at every kind of signals.

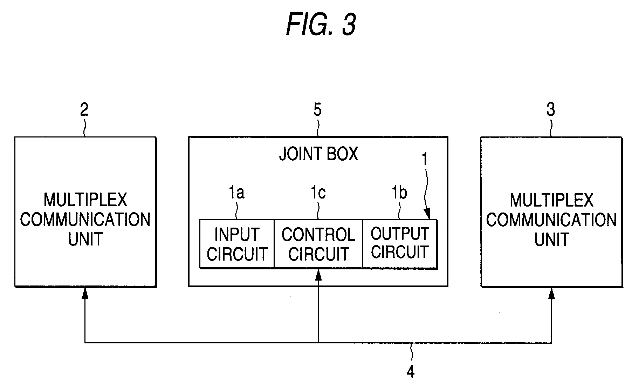

As shown in Fig. 3, in the conventional vehicle mounted multiplex communication system, a plurality of multiplex communication apparatuses 1 to 3 are connected to one or more communication medium (wiring path) 4 so that data is transmitted and received among these multiplex communication apparatuses 1 to 3. These multiplex communication apparatuses 1 to 3 are classified into two kinds of multiplex communication apparatuses, that is, a multiplex communication apparatus (reference numeral 1) operated in integration with a joint box 5, and multiplex communication apparatuses (reference numerals 2 and 3) operated individually. The former multiplex communication apparatus 1 is used, in many cases, in the vicinity of a central control portion since the joint box 5 can be connected easily and is made compact despite that it has a brunching function.

As shown in Fig. 3, the former multiplex communication apparatus 1 is formed by an input circuit 1a connected to signal input function parts such as operation switches etc., an output circuit 1b connected to signal output function parts such as lamps etc., and a control circuit 1c for controlling these circuits.

As examples of the multiplex communication apparatus 1 connected to the joint box 5, there have been known the following three prior art techniques.
That is, (1) (first prior art technique) the multiplex communication apparatus 1 is housed as a package within a casing similar to those for the multiplex communication apparatuses 2 and 3 each operated individually. The multiplex communication apparatus 1 is detachably integrated and coupled together with its package to the joint box 5 so that the multiplex communication apparatus 1 is separated from the joint box 5 and only the multiplex communication apparatus 1 can be exchanged for a new one, when the multiplex communication apparatus 1 itself becomes failure due to external reason such as wire breakage due to vibration, an overcurrent or the like.
(2) (second prior art technique) Although, the package casing of the multiplex communication apparatus 1 is also used as the joint box 5, upon the failure of the multiplex communication apparatus 1, the multiplex communication apparatus 1 can be separated from the joint box 5 and only the multiplex communication apparatus 1 can be exchanged for a new one. The multiplex communication apparatus 1 does not include an abnormality detection circuit for dealing with the failure thereof.
(3) (third prior art technique) Since the package casing of the multiplex communication apparatus 1 is also used as the joint box 5, it is impossible to separate only the multiplex communication apparatus 1 from the joint box 5 and exchange the multiplex communication apparatus for a new one. The multiplex communication apparatus 1 includes an abnormality detection circuit 6 which detects the abnormal change of current at the time of the failure of the multiplex communication apparatus 1 thereby to perform driving stop control thereof.

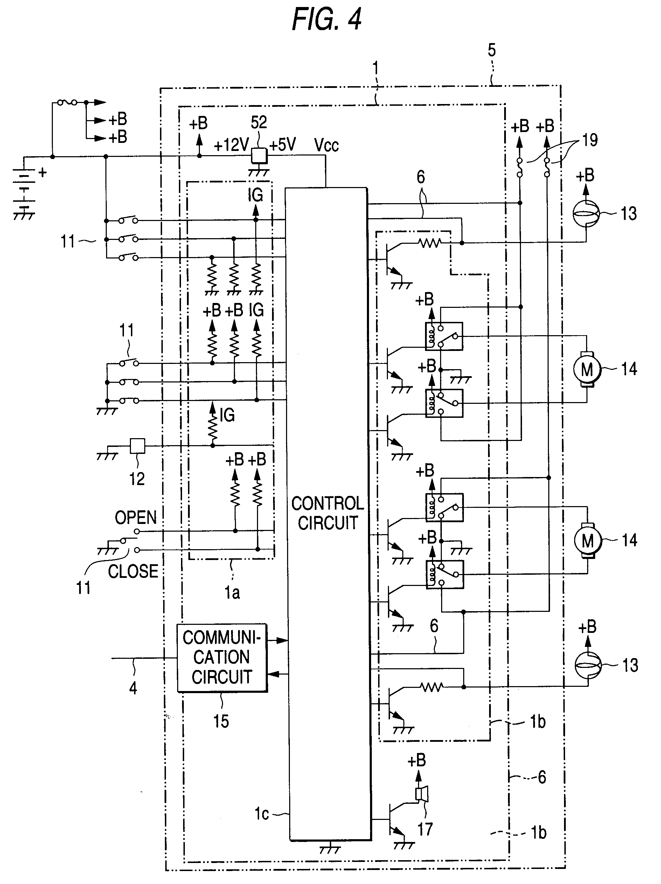

Fig. 4 shows an example of the circuit arrangement of the multiplex communication apparatus 1 according to the aforesaid third prior art technique (3). The multiplex communication apparatus 1 includes an input circuit 1a connected to various kinds of switches etc. 11 such as an ignition switch, a small light switch, a door lock switch or the like and sensors etc. 12 such as a vehicle speed sensor or the like; an output circuit 1b connected to various kinds of loads, that is, lamps etc. 13 such as a room lamp, a foot lamp or the like and driving motor systems 14 such as a door lock motor, a power window motor or the like; an abnormality detection circuit 6 for detecting the abnormal state in the output circuit 1b at the time of the failure etc. of the various kinds of the loads 13, 14; and a control circuit 1c for controlling these respective circuits 1a, 1b and 6. There may occur a case where any of the loads 13, 14 within the multiplex communication apparatus 1 operates abnormally. For example, there may occur a case where current to be flown into the load 13 or 14 does not flow therein or, on the contrary, an overcurrent flows through the load 13 or 14 when a switch is closed. In such a case, the control circuit 1c detects the abnormality of the current flowing through the various kinds of loads 13, 14 through the operation of the abnormality detection circuit 6, and controls the output circuit 1b suitably in accordance with the detection result thereby to cut off the current supplied to the various kinds of loads 13, 14. In this case, upon the operation of the various kinds of the switches or upon the detection of the abnormality by the control circuit 1c, a buzzer 17b is sounded to notify a driver etc. of the occurrence of abnormality or that the operation has not been terminated.

A reference numeral 15 in Fig. 4 depicts a communication circuit for converting signal into data format suitable for communication between the wiring path 4 connected to an external circuit and the control circuit 1c of the multiplex communication apparatus 1. A reference numeral 18 depicts a fuse provided for dealing with the case where an overcurrent is generated at the driving motor system 14. Even if such a fuse 18 is provided, for example, if an environmental wire is erroneously broken at the time of mounting or repairing the driving motor system 14, the fuse 18 may not be blown depending on the state of the short-circuit. As a consequence, various kinds of parts and circuits such as a relay within the output circuit 1b may be burn and broken. In such a case, the role of the abnormality detection circuit 6 was not negligible.

In general, portions liable to become failure in an automobile are the loads 13, 14 such as the room lamp, various kinds of driving motor systems or the like, as described above. Accordingly, a portion liable to become failure due to the burning of the element within the multiplex communication apparatus 1 is the output circuit 1b connected to the various kinds of the loads 13, 14. Further, in some case, the control circuit 1c may become failure due to the failire of the output circuit 1b. As a consequence, like the aforesaid first and second prior art techniques, when exchanging the multiplex communication apparatus 1 for a new one together with the package casing upon the failure of the output circuit 1b or the control circuit 1c within the multiplex communication apparatus 1, the input circuit 1a originally not necessary to be exchanged must also be exchanged for a new one. Thus, there arises a problem that the normal input circuit 1a is disposed.

In the third prior art technique, upon the failure of each of the loads, such a failure is detected by the abnormality detection circuit 6 and the breakage or the like of the output circuit 1b can be prevented, whereby it is possible to reduce the frequency of the exchange. However, since the abnormality detection circuit 6 is required, the cost of the multiplex communication system becomes expensive by the cost of this circuit.

### SUMMARY OF THE INVENTION

Accordingly, an object of the present invention is to provide a multiplex communication apparatus which is able to reduce the cost thereof by eliminating an abnormality detection circuit and to eliminate such a waste that an input circuit as well as an output circuit are exchanged for new ones at the time of the failure of the output circuit due to the failure of various kinds of loads.

In order to solve the aforesaid problem, the vehicle mounted multiplex communication system for effecting multiplex communication through a communication line among a plurality of multiplex communication apparatuses mounted within a vehicle, comprises: at least one first multiplex communication apparatus, which is at least one of the plurality of multiplex communication apparatuses, housed within a joint box integrally therewith; and a second multiplex communication apparatus, which is another of said plurality of multiplex communication apparatuses, disposed separately from the joint box and effecting multiplex communication with the first multiplex communication apparatus through the communication line, wherein the first multiplex communication apparatus includes an input circuit connected to various kinds of signal input means including various kinds of operation switches and sensors or the like disposed at respective portions of the vehicle, a first control circuit for controlling the input circuit, and a first communication circuit for converting signal from the first control circuit into data format suitable for communication through the communication line, and wherein the second multiplex communication apparatus includes an output circuit for changing loads to be driven including various kinds of lamps etc. for display and various kinds of driving systems, a second control circuit for controlling the output circuit, and a second communication circuit for transmitting a multiplex signal from the communication line to the second control circuit.

### BRIEF DESCRIPTION OF THE DRAWINGS

Fig. 1 is a schematic block diagram showing the entire arrangement of a vehicle mounted system according to the first embodiments of the present invention;
Fig. 2 is a schematic circuit diagram showing the arrangement of a joint box, a first multiplex; communication apparatus and a second multiplex communication apparatus according to the first embodiments of the present invention;
Fig. 3 is a schematic block diagram showing a vehicle mounted system according to the first to third prior art techniques; and
Fig. 4 is a schematic circuit diagram showing the arrangement of a joint box and a multiplex communication apparatus according to the third prior art technique.

### DETAILED DESCRIPTION OF THE PREFERRED EMBODIMENTS

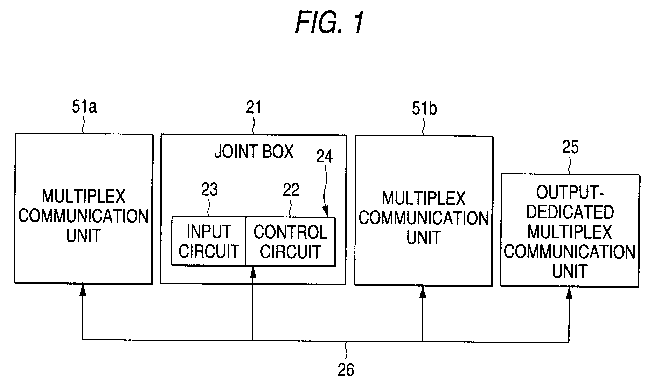

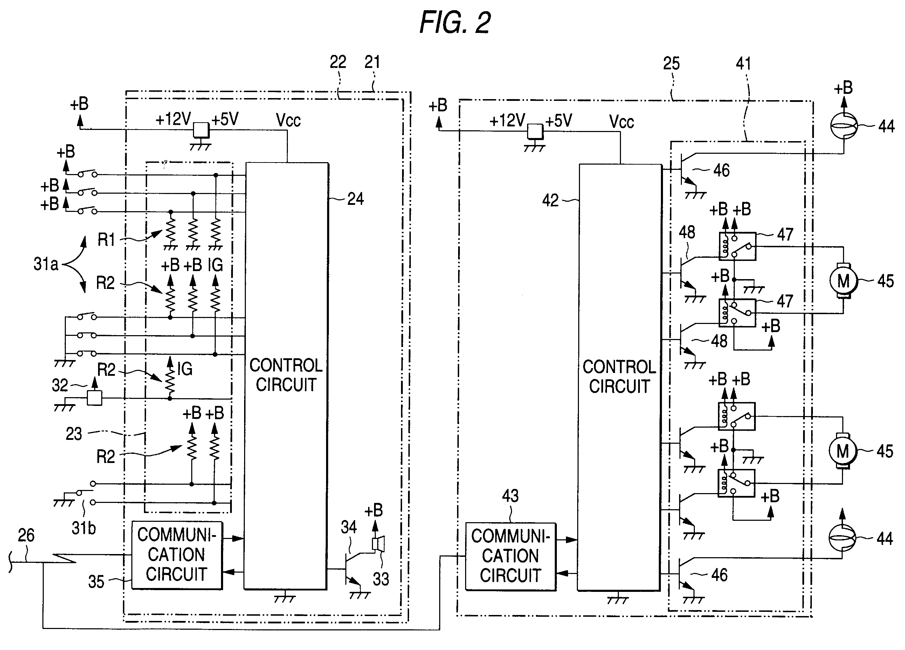

Fig. 1 is a schematic diagram showing the entire arrangement of a vehicle mounted multiplex communication system according to the first embodiments of the present invention and Fig. 2 is a schematic circuit diagram showing the arrangement of a part of the vehicle mounted multiplex communication system. The multiplex communication system according to the first embodiment is arranged in the following manner. That is, as shown in Fig. 1, an output circuit (corresponding to the block 1b in Fig. 4) for changing loads to be driven which may be broken due to external reason is removed from a multiplex communication apparatus 22 (first multiplex communication apparatus) housed within a joint box 21, and the multiplex communication apparatus 22 is formed by an input circuit 23 and a control circuit 24. Further, the output circuit for changing loads to be driven is replaced by connecting an individual output-dedicated multiplex communication apparatus 25 (second multiplex communication apparatus) to a bus line, that is, a multiplex line (communication line) 26 separately from other multiplex communication apparatuses.

The joint box 21 is a generally known casing having outer wall portions formed by insulative resin or the like and a connector chamber for connecting the multiplex line 26 at one end of the outer wall portion.

The multiplex communication apparatus 22 has a package casing, for protecting internal circuits and various kinds of electronic parts contained therein, which is integrally formed with the outer wall portions of the joint box 21. Since the output circuit is removed from the multiplex communication apparatus 22, the possibility of the failure of the multiplex communication apparatus 22 becomes quite low and hence the necessity for replacing the multiplex communication apparatus 22 with a new one becomes also quite low. Accordingly, the multiplex communication apparatus 22 is arranged such that it can not be separated from the joint box 21 nor replaced with a new one in view of the easiness of manufacturing the system and the reduction of the number of parts thereof, or the like.

As shown in Fig. 2, the multiplex communication apparatus 22 includes an input circuit 23 connected to various kinds of switches etc. 31a, 31b such as an ignition switch, a small light switch, a door lock switch or the like and sensors etc. 32 such as a vehicle speed sensor or the like; a control circuit 24 for controlling the input circuit 23; a buzzer 33 being sounded upon operation of each of the various kinds of switches 31a, 31b; a sound change-over switch 34; and a communication circuit 35 for converting signal into data format suitable for, communication between the external multiplex line 26 and the control circuit 24.

The input circuit 23 includes a plurality of signal lines which are wired from the various kinds of the switches etc. 31a, 31b and the sensors etc. 32 to the control circuit 24 independently and in parallel to one after another. The intermediate points of some of the respective signal lines are grounded through resistors R1 and the intermediate points of the remaining ones of the respective signal lines are connected to the battery of the automobile through resistors R2. The control circuit 24 detects the changes of the voltages at the respective signal lines caused by the operations of the various kinds of the switches etc. 31a, 31b and the sensors 32.

The control circuit 24 detects the operation signals from the various kinds of the switches etc. 31a, 31b and the detection signals from the sensors etc. 32 obtained through the input circuit 23. Then, the control circuit synthesizes these signals from the input circuit in accordance with a predetermined communication method such as the frequency division multiplex method, time division multiplex method, code division multiplex method or the like so that these signals can be discriminated, thereby to output the synthesized signal to the communication circuit 35.

The communication circuit 35 outputs the synthesized signal transmitted from the control circuit 24 to the multiplex line 26 at suitable timings.

The individual output-dedicated multiplex communication apparatus 25 includes an output circuit 41 which is removed from the multiplex communication apparatus 22, a control circuit 42 for controlling the output circuit 41, and a communication circuit 43 for outputting signals transmitting through the multiplex line 26 to the control circuit 42.

The output circuit 41 is connected to various kinds of loads, that is, various kinds of lamps etc. 44 such as a room lamp, a foot lamp or the like and various kinds of driving motor systems 45 such as a door lock motor, a power window motor or the like, and selectively drives these loads. To be more concrete, the output circuit includes lamp switching elements 46 which are turned on and off thereby to selectively supply driving currents to the various kinds of lamps etc. 44 in accordance with instruction signals from the control circuit 42, relays 47 which are selectively changed over thereby to selectively supply driving currents to the various kinds of the driving motor systems 45, and driving system switching elements 48 which are selectively turned on and off thereby to selectively close and open the relays 47 in accordance with instruction signals from the control circuit 42.

The control circuit 42 has a function of separating or extracting the signals obtained from the multiplex line 26 through the communication circuit 43 in accordance with the predetermined communication method having been performed in the control circuit 24 of the multiplex communication apparatus 22 within the joint box 21, then selecting corresponding ones of the switching elements 46, 48 within the output circuit 41 in accordance with the separated or extracted signals thereby to output the drive instruction signals. Further, the control circuit has a function of returning a message that the control circuit has received the signals through the multiplex line 26 to the originator, that is, the multiplex communication apparatus 22 (or an individual multiplex communication apparatus 51a or 51b described later).

Reference numerals 51a, 51b in Fig. 1 depict the individual multiplex communication apparatuses which correspond to the individual multiplex communication apparatuses 2, 3 in Fig. 3 and connected to the bus line, that is, the multiplex line 26 together with the multiplex communication apparatus 22 within the joint box 21 and the individual output-dedicated multiplex communication apparatus 25. A reference numeral 52 in Fig. 2 depicts a transformer for converting the output voltage of the battery (power supply).

In the vehicle mounted multiplex communication system arranged in the aforesaid manner, at the time of normal operation, the various kinds of the switches etc. 31a, 31b connected to the input circuit 23 of the multiplex communication apparatus 22 are operated and the signals from the sensors etc. 32 depending on the circumferential condition are inputted into the input circuit 23. In the input circuit 23, the voltages on the respective signal lines change. When the control circuit 24 detects and determines such voltage changes in the signal lines, the control circuit synthesizes the signals from the input circuit in accordance with the predetermined communication method and supplies the synthesized signal to the multiplex line through the communication circuit 35. Such a synthesized signal is transmitted to the individual output-dedicated multiplex communication apparatus 25 and the individual multiplex communication apparatuses 51a, 51b.

When such a synthesized signal is transmitted to the individual output-dedicated multiplex communication apparatus 25 from the multiplex communication apparatus 22, the control circuit 42 separates or extracts the signals obtained through the communication circuit 43 and selects corresponding ones of the switching elements 46, 48 within the output circuit 41 in accordance with the separated or extracted signals thereby to output the drive instruction signals. Thus, one or more of the switching elements 46, 48 within the output circuit 41 are turned on or closed thereby to turn on desired one(s) of the lamps etc. 44 or drive desired one(s) of the driving motor systems 45.

If one(s) of the various kinds of lamps 44 or the various kinds of driving motor systems 45 becomes failure due to any external reasons, for example, if an ovrecurrent flows into the various kinds of lamps etc. 44 or the various kinds of driving motor systems 45 and the switching elements 46, 48 corresponds thereto due to the occurrence of the short-circuit, these constituent elements may become failure due to the burning or the like. In this case, it is required to exchange or repair only the individual output-dedicated multiplex communication apparatus 25.

In this case, since the individual output-dedicated multiplex communication apparatus 25 does not include a circuit corresponding to the input circuit 23 provided in the multiplex communication apparatus 22 within the joint box 21, the cost for exchanging the individual output-dedicated multiplex communication apparatus for a new one can be made cheaper by the cost of the input circuit.

In most cases in the normal operation, portions which becomes failure due to the short-circuit are the portions of the output circuit 41 such as lamp driving control portion, a relay coil driving control or the like. In contrast, the probability that the multiplex communication apparatus 22 within the joint box 21 having the input circuit 23 and the control circuit 24 as the main constituent elements becomes failure is quite low. Accordingly, unlike the aforesaid first to third prior art techniques, there scarcely arises any necessity of exchanging the multiplex communication apparatus 22 within the joint box 21 for a new one.

By the similar reason, an abnormality detection circuit (corresponding to the abnormality detection circuit 6 in Fig. 4) provided on the assumption of the failure due to the external reason is required to be provided in neither of the multiplex communication apparatus 22 within the joint box 21 nor the individual output-dedicated multiplex communication apparatus 25. Thus, the degree of freedom for designing the circuits within both the multiplex communication apparatuses 22, 25 can be improved.

Further, the multiplex communication apparatus 22 within the joint box 21 does not require the circuit (corresponding to the output circuit 1b in Fig. 4) corresponding to the output circuit 41 within the individual output-dedicated multiplex communication apparatus 25. Accordingly, the required space within the joint box 21 can be decreased.

In the present invention, the various kinds of switches etc. 31a, 31b, sensors etc. 32, various kinds of the lamps etc. 44 and various kinds of the driving motor systems 45 are not limited to those described above, but other types thereof may be employed.

As described above, according to the present invention, since the output circuit for changing load to be driven, which is liable to become failure due to external reason, is eliminated from the first multiplex communication apparatus integrally housed within the joint box, the probability of the failure of the first multiplex communication apparatus can be reduced to a large extent. Further, since not only the output circuit but also the abnormality detection circuit according to the third prior art technique provided on the assumption that the first multiplex communication apparatus side becomes failure due to external reason can be eliminated, the circuit area for the first multiplex communication apparatus as well as the entire size of the joint box can be reduced to a large extent. Accordingly, the joint box becomes easy to handle.

In the arrangement of the second multiplex communication apparatus side mounting thereon the output circuit liable to become failure, since the input circuit is eliminated therefrom, there is an advantage that the cost of exchanging the second multiplex communication apparatus for a new one at the time of the failure thereof becomes smaller.

## Claims

1. A vehicle mounted multiplex communication system for effecting multiplex communication through a communication line among a plurality of multiplex communication apparatuses mounted within a vehicle, said system comprising:
at least one first multiplex communication apparatus housed within a joint box integrally therewith, said first multiplex communication apparatus including: an input circuit connected to signal input means; a first control circuit for controlling said input circuit; and a first communication circuit for converting signal from said first control circuit into data format suitable for communication through said communication line; and
a second multiplex communication apparatus disposed separately from said joint box and effecting multiplex communication with said first multiplex communication apparatus through said communication line, said second multiplex communication apparatus including: an output circuit for selectively driving loads; a second control circuit for controlling said output circuit; and a second communication circuit for transmitting a multiplex signal from said communication line to said second control circuit.

2. A vehicle mounted multiplex communication system as claimed in claim 1, wherein said input means includes various kinds of operation switches and sensors or the like disposed at respective portions of the vehicle.

3. A vehicle mounted multiplex communication system as claimed in claim 1, wherein said output means includes various kinds of lamps etc. for display and various kinds of driving systems
